# EUROPÄISCHE PATENTSCHRIFT

(11) **EP 0 445 615 B1**
(45) Veröffentlichungstag und Bekanntmachung des Hinweises auf die Patenterteilung: **14.07.1993**
(21) Anmeldenummer: 91102710.0
(22) Anmeldetag: 23.02.1991
(51) Int. Cl.: B23B 31/02, B23Q 11/10, F16J 15/00

(54) **Schnellwechselfutter mit einer Kühlschmierstoff-Dichtung**
Quick-change chuck with a cooling lubricant seal
Porte-mèche à serrage rapide avec un étoupage réfrigérant lubrifiant

(30) Priorität: 03.03.1990 DE 9002487 U
(43) Veröffentlichungstag der Anmeldung: 11.09.1991
(73) Patentinhaber: Emuge-Werk Richard Glimpel, Fabrik für Präzisionswerkzeuge, vormals Moschkau & Glimpel, D-91207 Lauf (DE)
(72) Erfinder: Kazda, Thomas, W-8564 Hartenstein (DE)
(74) Vertreter: Böhme, Volker, Dipl.-Ing.

(56) Entgegenhaltungen:
- EP-A- 0 350 725
- DE-A- 3 314 719
- DE-A- 3 523 285
- DE-A- 3 902 559
- US-A- 3 905 609
- US-A- 4 396 317

## Beschreibung

Die Neuerung betrifft ein Schnellwechselfutter für ein Werkzeug, bei dem ein Wechseleinsatz in einer Einsatzaufnahme gegen Verschiebungen in Richtung einer Mittelachse mittels einer radialen Verrastung gesichert ist, bei der ein in der Einsatzaufnahme gelagerter Rastkörper in eine Ausnehmung des Wechseleinsatzes greift, bei der die Einsatzaufnahme einen Boden aufweist, in dem eine Rohrleitung für Kühlschmierstoff vorgesehen ist, die in einer Ausnehmung eines mit einem Durchbruch versehenen Bodens des Wechseleinsatzes mündet, und bei der eine ringförmige Dichtung zwischen den Böden von Wechseleinsatz und Einsatzaufnahme in Achsrichtung geklemmt angeordnet ist und das Ende der Rohrleitung sowie die Ausnehmung bzw. den Durchbruch umschließt. Ein derartiges Schnellwechselfutter ist z.B. aus der DE-A-3 523 285 bekannt.

Bei einem durch die Praxis bekannten Schnellwechselfutter dieser Art ist die Dichtung ein O-Ring mit einem runden oder ovalen Querschnitt. Die Verrastung läßt den Wechseleinsatz relativ viel axiales Spiel, das von der Dichtung aufzunehmen ist und das z.B. bis zu 5/10 mm beträgt. Die Zusammendrückbarkeit des O-Ringes in Achsrichtung ist begrenzt. Es muß die Dichtung für jeden Einzelfall gesondert ausgewählt und eingepaßt werden, damit sie gegen den Druck des Kühlschmierstoffes, der z.B. 5-50 bar betragen kann, mit Sicherheit dichtet.

Eine Aufgabe der Neuerung ist es, ein Schnellwechselfutter der eingangs genannten Art zu schaffen, bei dem die Dichtung das axiale Spiel des Wechseleinsatzes in der Einsatzaufnahme besser aufnehmen kann. Das neuerungsgemäße Schnellwechselfutter ist, diese Aufgabe lösend, dadurch gekennzeichnet, daß die Dichtung im Querschnitt als U mit Quersteg und zwei Schenkeln ausgebildet ist, das zur Mittelachse hin offen ist und dessen beiden Schenkel an je einem der beiden Böden anliegen, daß der eine Schenkel mit dem freien Ende an dem zugehörigen Boden anliegend mit dem dem U-Quersteg zugeordneten Schenkelbereich in Achsrichtung Abstand von diesem Boden aufweist und daß dieser Schenkel, in Relation zu einem entspannten Zustand, zu dem anderen Schenkel hin elastisch gebogen ist.

Gemäß der Neuerung ist die Dichtung mit U-Querschnitt zum Abdichten bei axialer Belastung eingesetzt und wird ein Schenkel auf Biegung beansprucht, um axiales Spiel auszugleichen. Die Biegung des Schenkels erfolgt ohne großen Kraftaufwand bei jedem Einrasten des Schnellwechseleinsatzes und läßt gröbere axiale Verformungen zu als die Kompression eines O-Ringes. Der zu biegende Schenkel ist eine Dichtlippe. Die Anlagefläche des zu biegenden Schenkels an dem zugeordneten Boden ist gering gehalten.

Besonders zweckmäßig und vorteilhaft ist es, wenn die Dichtung mit dem einen U-Schenkel über dessen Länge am Boden der Einsatzaufnahme anliegt und an diesem festgelegt ist und der gebogene Schenkel frei vom Boden des Wechseleinsatzes ist. Die U-Dichtung ist an der Einsatzaufnahme festgelegt und der Wechseleinsatz kommt beim Einrasten mit dem zu biegenden Schenkel in Berührung.

Besonders zweckmäßig und vorteilhaft ist es auch, wenn die Abmessung der entspannten U-Dichtung in Achsrichtung bei den freien Enden der Schenkel größer ist als beim Quersteg. Das U der entspannten Dichtung ist also aufgespreizt, was die Gestaltung des Bodens vereinfacht, der an dem zu biegenden Schenkel angreift. In der Regel bildet der zu biegende Schenkel mit einer durch dessen freies Ende verlaufenden Parallelen zum anderen Schenkel einen Winkel von 10 - 45°.

Besonders zweckmäßig und vorteilhaft ist es noch, wenn sich der zu biegende Schenkel in der Dicke zum freien Ende hin verjüngt. Dies vereinfacht die Biegung des Schenkels und verbessert dessen Dichtwirkung.

Besonders zweckmäßig und vorteilhaft ist es sodann, wenn der zweite Schenkel über einen einspringenden Absatz in einen Ringansatz übergeht, der von einer Haltescheibe überfaßt ist, die relativ zum Boden festgelegt ist. Durch diese Befestigung der U-Dichtung wird der zweite Schenkel in dauerhaft dichter Anlage am zugeordneten Boden gehalten. Die Festlegung der Haltescheibe erfolgt z.B. durch Schrauben, Sprengring oder Schweißen.

Besonders zweckmäßig und vorteilhaft ist es weiterhin, wenn die Dichtung in eine Ausnehmung eines der beiden Böden eingesetzt ist und wenn die U-Dichtung mit dem Quersteg an einer axial vorspringenden Wandung der Ausnehmung radial abgestützt ist. Die Dichtung bzw. der zu biegende Schenkel darf unter dem Druck des Kühlschmierstoffes nicht radial nach außen ausweichen, weshalb eine den Quersteg in Achsrichtung ausreichend weit überfassende Abstützung wichtig ist.

In der Zeichnung ist eine bevorzugte Ausführungsform der Neuerung dargestellt und zeigt
- Fig. 1: einen Schnitt eines Teiles eines Schnellwechselfutters mit einer Kühlschmierstoff-Dichtung und
- Fig. 2: einen Schnitt eines Teiles der Dichtung des Schnellwechselfutters gemäß Fig. 1 in einen gegenüber Fig. 1 vergrößerten Maßstab.

Das Schnellwechselfutter gemäß Zeichnung weist einen hülsenförmigen Wechseleinsatz 1 auf, in dem ein Werkzeugschaft 2 sitzt, der mit einen endseitigen Vierkantstück 3 in einen Durchbruch 4 eines Bodens 5 des Wechseleinsatzes ragt. Der Durchbruch 4 geht in eine kugelschalenförmige, vom Boden 5 gebildete Ausnehmung 6 über, die nach der dem Werkzeugschaft 1 gegenüberliegenden Seite hin offen ist und von einem Randsims umgeben ist, der eine Anlagefläche 7 bildet. Im Bereich des Bodens 5 weist der Wechseleinsatz 1 eine Ausnehmung 8 auf, die als rinnenartige umlaufende Nut ausgebildet ist und in die ein Rastkörper 10 greift. Der Wechseleinsatz 1 steckt in einer hülsenförmigen Einsatzaufnahme 11 und ist in dieser in Richtung einer Mittelachse 12 hin und her verschiebbar. Der Rastkörper 10 ist als Kugel ausgebildet und in einem Durchbruch 13 der Einsatzaufnahme 11 gelagert. Die Einsatzaufnahme 11 ist von einer Schiebebüchse 14 aufgenommen, die bei geeigneter axialer Position in Aussparungen 15 die Rastkörper 10 aufnimmt, so daß der Wechseleinsatz 1 aus der Einsatzaufnahme 11 gezogen werden kann. Die Einsatzaufnahme 11 weist einen Boden 16 auf, der im wesentlichen parallel zum Boden 5 des Wechseleinsatzes 1 ist. Im Boden 16 der Einsatzaufnahme 11 endet eine axial verlaufende Rohrleitung 17, die in dem Raum zwischen den beiden Böden 5, 16 bzw. in die Ausnehmung 6 des Bodens 5 des Wechseleinsatzes 1 mündet und über die gemäß einem Pfeil 18 Kühlschmierstoff zugeführt wird.

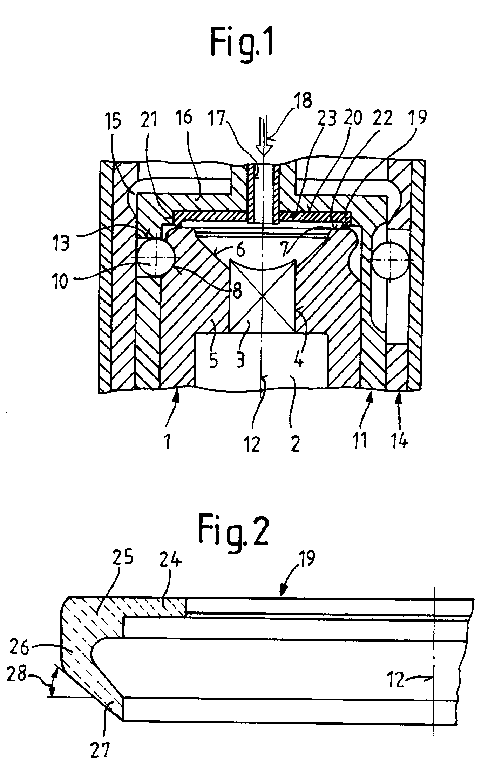

Zwischen den beiden Böden 5, 16 ist eine Dichtung 19 angeordnet, die ringförmig ist und die Rohrleitung 17 sowie die Ausnehmung 6 umgibt. Die Dichtung 19 ist in eine scheibenförmig flache Ausnehmung 20 des Bodens 16 der Einsatzaufnahme 11 eingelegt und liegt radial nach außen hin rundum an einer axial vorspringenden Wandung 21 der Ausnehmung 20 an. Die Dichtung 19 liegt einerseits an der Anlagefläche 7 des Wechseleinsatzes 1 und andererseits in der Ausnehmung 20 an einer Anlagefläche 22 der Einsatzaufnahme 11 an. An einem vorderen vorragenden Endstück der Rohrleitung 17 ist eine Haltescheibe 23 festgelegt, die in der Ausnehmung 20 angeordnet ist und einen radial nach innen angeordneten, in der Dicke verjüngten Ringansatz 24 der Dichtung 19 übergreift. Die Dichtung 19 ist gemäß Fig. 2 im Querschnitt U-förmig gestaltet; der Ringansatz 24 sitzt an einem Schenkel 25 der Dichtung, der über einen Quersteg 26 mit einen zweiten Schenkel 27 verbunden ist, der unter einem Winkel 28 von ca. 40° schräg gestellt ist. Wie in Fig. 1 angedeutet ist, ist dieser Schenkel 27 nach der Verrastung mit dem freien Ende in Richtung zum anderen Schenkel 25 gebogen und weist der dem Quersteg 26 nahe Bereich des gebogenen Schenkels 27 Abstand von dem Boden 5 bzw. der Anlagefläche 7 des Wechseleinsatzes 1 auf.

## Patentansprüche

1. Schnellwechselfutter für ein Werkzeug,
bei den ein Wechseleinsatz (1) in einer Einsatzaufnahme (11) gegen Verschiebungen in Richtung einer Mittelachse mittels einer radialen Verrastung gesichert ist, bei der ein in der Einsatzaufnahme (11) gelagerter Rastkörper (10) in eine Ausnehmung (8) des Wechseleinsatzes (1) greift,
bei der die Einsatzaufnahme (11) einen Boden (16) aufweist, indem eine Rohrleitung (17) für Kühlschmierstoff vorgesehen ist, die in einer Ausnehmung (6) eines mit einem Durchbruch versehenen Bodens (5) des Wechseleinsatzes (1) mündet, und
bei der eine ringförmige Dichtung (19) zwischen den Böden (5,16) von Wechseleinsatz (1) und Einsatzaufnahme (11) in Achsrichtung geklemmt angeordnet ist und das Ende der Rohrleitung (17) sowie die Ausnehmung (6) bzw. den Durchbruch umschließt,
**dadurch gekennzeichnet,**
daß die Dichtung (19) im Querschnitt als U mit Quersteg (26) und zwei Schenkeln (25, 27) ausgebildet ist, das zur Mittelachse (12) hin offen ist und dessen beiden Schenkel (25, 27) an je einen der beiden Böden (5, 16) anliegen,
daß der eine Schenkel (27) mit dem freien Ende an dem zugehörigen Boden (5) anliegend mit dem dem U-Quersteg (26) zugeordneten Schenkelbereich in Achsrichtung Abstand von diesem Boden (5) aufweist und
daß dieser Schenkel (27), in Relation zu einem entspannten Zustand, zu dem anderen Schenkel (25) hin elastisch gebogen ist.

2. Schnellwechselfutter nach Anspruch 1, **dadurch gekennzeichnet,** daß die Dichtung (19) mit dem einen U-Schenkel (25) über dessen Länge am Boden (16) der Einsatzaufnahme (11) anliegt und an dieser festgelegt (23) ist und der gebogene Schenkel (27) frei vom Boden (5) des Wechseleinsatzes (1) ist.

3. Schnellwechselfutter nach Anspruch 1 oder 2, **dadurch gekennzeichnet,** daß die Abmessung der entspannten U-Dichtung (19) in Achsrichtung bei dem freien Ende der Schenkel (24, 27) größer ist als die beim Quersteg (26).

4. Schnellwechselfutter nach Anspruch 1, 2 oder 3, **dadurch gekennzeichnet,** daß sich der zu biegende Schenkel (27) in der Dicke zum freien Ende hin verjüngt.

5. Schnellwechselfutter nach einem der vorhergehenden Ansprüche, **dadurch gekennzeichnet,** daß der zweite Schenkel (25) über einen einspringenden Absatz in einen inneren Ringansatz (24) übergeht, der von einer Haltescheibe (23) überfaßt ist, die relativ zum Boden (16) festgelegt ist.

6. Schnellwechselfutter nach einem der vorhergehenden Ansprüche, wobei die Dichtung in eine Ausnehmung eines der beiden Böden eingesetzt ist, **dadurch gekennzeichnet,** daß die U-Dichtung (19) mit den Quersteg (26) an einer axial vorspringenden Wandung (21) der Ausnehmung (20) radial abgestützt ist.

## Revendications

1. Porte-outil à serrage rapide dans lequel un mandrin de serrage (1) est bloqué dans un porte-mandrin (11) contre des déplacements dans la direction d'un axe central au moyen d'un dispositif de verrouillage radial dans lequel un corps de verrouillage (10) reposant dans le porte-mandrin (11) s'encastre dans un évidement (8) du mandrin de serrage (1), dans lequel le porte-mandrin (11) présente un fond (16) dans lequel est prévu un conduit tubulaire (17) destiné à un lubrifiant réfrigérant, et qui débouche dans un évidement (6) d'un fond (5) du mandrin de serrage 1, muni d'un trou de passage et dans lequel un joint annulaire (19) est bloqué dans la direction axiale entre les fonds (5, 16) du mandrin de serrage (1) et du porte-mandrin (11) et entoure l'extrémité du conduit tubulaire (17) ainsi que l'évidement (6) ou le trou de passage, caractérisé en ce que le joint (19) a une section transversale en forme de U à barre transversale (26) et deux branches (25, 27), ouvert en direction de l'axe central (12) et dont les deux branches (25, 27) sont accolées respectivement à un des deux fonds (5, 16), en ce qu'une branche (27) accolée par son extrémité libre au fond (5) correspondant est distante dans la direction axiale de ce fond (5) au niveau de sa partie correspondant à la barre transversale (26) du U et en ce que cette branche (27), par rapport à un état relâché, est fléchie élastiquement en direction de l'autre branche (25).

2. Porte-outil à serrage rapide selon la revendication 1, caractérisé en ce que le joint (19) est accolé par la branche (25) du U sur toute la longueur de cette dernière contre le fond (16) du porte-mandrin (11) et est immobilisé contre ce dernier (23) et que la branche fléchie (27) n'est pas en contact avec le fond (5) du mandrin de serrage (1).

3. Porte-outil à serrage rapide selon la revendication 1 ou 2, caractérisé en ce que la dimension du joint en U (19) à l'état relâché dans la direction axiale est supérieure, à l'extrémité libre des branches (24, 27), à celle de la barre transversale (26).

4. Porte-outil à serrage rapide selon la revendication 1, 2 ou 3, caractérisé en ce que l'épaisseur de la branche à fléchir (27) diminue en direction de l'extrémité libre.

5. Porte-outil à serrage rapide selon une des revendications précédentes, caractérisé en ce que la deuxième branche (25) se transforme par un décrochement en une butée annulaire interne (24) qui est sertie d'une rondelle de retenue (23) immobilisée par rapport au fond (16).

6. Porte-outil à serrage rapide selon une des revendications précédentes, le joint étant placé dans un évidement d'un des deux fonds, caractérisé en ce que le joint en U (19) s'appuie radialement par sa barre transversale (26) à une paroi (21) en saillie axiale de l'évidement (20).

## Claims

1. A quick-change chuck for a tool, wherein an exchangeable insert (1) in an insert receiver (11) is secured against displacement in the direction of a centre axis by means of a radial detent, wherein a locking element (10) mounted in the insert receiver (11) engages in a recess (8) of the exchangeable insert (1), wherein the insert receiver (11) has a base (16) and a conduit (17) for cooling lubricant which leads into a recess (6) of a base (5) of the exchangeable insert (1), the said base (5) being provided with an opening, and wherein an annular seal (19) is arranged so as to be clamped between the bases (5, 16) of the exchangeable insert (1) and the insert receiver (11) in the axial direction and surrounds the end of the conduit (17) and also the recess (6) and the opening, characterised in that in cross-section the seal (19) is formed as a U which has a cross-piece (26) and two arms (25, 27) and which is open towards the centre axis (12), the two arms (25, 27) each resting against a respective one of the two bases (5, 16), in that the region - associated with the U-cross-piece (26) - of one arm (27), the free end of which rests against the associated base (5), is at a distance from the said base (5) in the axial direction, and in that this arm (27), in comparison with an unstressed state, is resiliently curved towards the other arm (25).

2. A quick-change chuck according to claim 1, characterised in that one of the U-arms (25) of the seal (19) rests, over its length, against the base (16) of the insert receiver (11) and is secured (23) thereto and the curved arm (27) is free of the base (5) of the exchangeable insert (1).

3. A quick-change chuck according to claim 1 or 2, characterised in that the dimension of the unstressed U-seal (19) in the axial direction at the free ends of the arms (24, 27) is greater than that at the cross-piece (26).

4. A quick-change chuck according to claim 1, 2 or 3, characterised in that the thickness of the arm (27) to be curved diminishes towards the free end.

5. A quick-change chuck according to any one of the preceding claims, characterised in that the second arm (25) merges via a re-entrant shoulder into an inner annular offset (24), over which is mounted a retaining disc (23) secured relative to the base (16).

6. A quick-change chuck according to any one of the preceding claims, wherein the seal is inserted into a recess of one of the two bases, characterised in that the U-seal (19) with the cross-piece (26) is radially supported on an axially projecting wall (21) of the recess (20).
